# EUROPÄISCHE PATENTSCHRIFT

(11) **EP 1 504 933 B1**
(45) Veröffentlichungstag und Bekanntmachung des Hinweises auf die Patenterteilung: **18.10.2006**
(21) Anmeldenummer: 04017956.6
(22) Anmeldetag: 29.07.2004
(51) Int. Cl.: B60H 1/00, F24F 13/24, B29C 49/00

(54) **Verfahren zur Herstellung eines Luftführungselementes für ein Kraftafhrzeug sowie Vorrichtung zur Durchführung des Herstellungsverfahrens**
Method of manufacturing an air guiding element for a vehicle and device for carrying out the manufacturing method
Procédé de fabrication d'un élément de guidage d'air pour un véhicule et dispositif pour la mise en oeuvre du procédé de fabrication

(30) Priorität: 06.08.2003 DE 10335855
(43) Veröffentlichungstag der Anmeldung: 09.02.2005
(73) Patentinhaber: REHAU AG + Co, 95111 Rehau (DE)
(72) Erfinder: Welzer, Jürgen, 95111 Rehau (DE)

(56) Entgegenhaltungen:
- EP-A- 0 338 908
- WO-A-20/04007108
- GB-A- 2 376 215
- US-A- 6 071 370
- PATENT ABSTRACTS OF JAPAN Bd. 010, Nr. 238 (M-508), 16. August 1986 (1986-08-16) -& JP 61 070335 A (TOYODA GOSEI CO LTD), 11. April 1986 (1986-04-11)
- PATENT ABSTRACTS OF JAPAN Bd. 013, Nr. 320 (M-853), 20. Juli 1989 (1989-07-20) -& JP 01 105723 A (KOJIMA PRESS CO LTD), 24. April 1989 (1989-04-24)

## Beschreibung

Die Erfindung betrifft ein Verfahren zur Herstellung eines Luftführungselements nach dem Oberbegriff des Anspruches 1 und eine Vorrichtung zur Durchführung des Herstellungsverfahrens.

Ein gattungsgemäßes Verfahren ist aus der JP 61 070335 A bekannt.

Beim Luftführungselement nach der DE 37 25 147 A1 ist eine Schaumstoffschicht eingesetzt, welche eine Innenwand des Grundkörpers auskleidet. Die Schaumstoffschicht und die diese umgebende geschlossene äußere Schicht werden durch Koextrusion und anschließendes Blasformen hergestellt, wobei die Schaumstruktur durch Zusatz von Treibmittel erzielt wird. Dieses Herstellungsverfahren ist relativ aufwendig und erfordert die genaue Einhaltung bestimmter Prozessparameter.

Weitere Luftführungselemente mit Dämmung sind bekannt aus der EP 0 338 908 A1, der WO 2004/007108 A2 und der GB 2 376 215 A. Aus der JP 01 105723 A ist ein Verbindungsverfahren zweier Kunststofflagen bekannt, bei dem ein Blasvorformling mit einer vorbehandelten Oberflächenlage in einer Blasform verbunden wird. Ein ähnliches Verbindungsverfahren zeigt die US 6,071,370 A im Zusammenhang mit der Herstellung eines Kraftstofftanks.

Eine Aufgabe der Erfindung ist es, ein besonders wirtschaftliches Herstellungsverfahren für das erfindungsgemäße Luftführungselement anzugeben.

Diese Aufgabe ist erfindungsgemäß gelöst durch ein Verfahren mit den Merkmalen des Anspruchs 1.

Beim erfindungsgemäßen Herstellungsverfahren erfolgen das Blasen des Blasvorformlings zum Grundkörper einerseits und das Verbinden des Grundkörpers mit dem sich als Folge des Blasvorgangs ausformenden Zusatzkörper andererseits innerhalb der Blasform in einem geschlossenen Verfahrensgang.

Es ergibt sich somit ein Verfahren mit vorteilhaft wenigen Schritten. Aufgrund der für das Blasen sowieso erforderlichen Beheizung des Vorformlings kann dieser in den Zusatzkörper schon ausreichend Energie eintragen, um eine Schweißverbindung mit diesem herzustellen.

Sollte diese thermische Energie nicht ausreichend sein, kann ohne großen Aufwand zusätzlich geheizt werden. Bei der erfindungsgemäßen Herstellung wird der Blasvorformling gleichzeitig mit dem Schaumstoffkörper eingebracht. Dies ist besonders effizient und zeitsparend.

Die taktgebundene thermische Vorbehandlung des Schaumstoffkörpers erleichtert die Ausbildung der Schweißverbindung zwischen Grund- und Zusatzkörper.

Ein Manipulator nach Anspruch 2 erhöht den Automatisierungsgrad des Verfahrens.

Eine Schaumstoffrolle nach Anspruch 3 ermöglicht eine Massenproduktion des Luftführungselements.

Eine Fixierung nach Anspruche 4 verbessert die Reproduzierbarkeit des Herstellvorgangs.

Ein Temperierschritt nach Anspruch 5 kann beispielsweise zum Beheizen des Blasvorformlings dienen, sodass dann, wenn die über den Vorformling in Folge des Blasvorgangs eingebrachte thermische Energie nicht ausreichen sollte, ein sicheres Verschweißen erfolgt.

Alternativ oder zusätzlich kann der Temperierschritt aber auch ein Kühlschritt sein, insbesondere zum Abführen eingebrachter thermischer Energie, die in Folge der formgebenden Schritte in die Blasform ein-/ausgebracht wurde.

Eine Innenkühlung nach Anspruch 6 ermöglicht in eleganter Weise eine Kühlung der Blasform durch die Blasluft. Neben der Formgebungsfunktion hat die Blasluft in diesem Falle gleichzeitig eine Kühlfunktion.

Eine weitere Aufgabe der Erfindung ist es, eine Vorrichtung nach dem Oberbegriff des Anspruchs 7 derart weiterzubilden, dass mit einer solchen Vorrichtung das erfindungsgemäße Verfahren durchführbar ist.

Diese Aufgabe ist erfindungsgemäß gelöst durch eine Vorrichtung mit den im Kennzeichnungsteil des Anspruchs 7 angegebenen Merkmalen.

Die Vorteile der erfindungsgemäßen Vorrichtung entsprechen denjenigen, die oben im Zusammenhang mit dem Verfahren erläutert wurden.

Die Vorteile der Vorrichtung nach den Ansprüchen 8 bis 11 entsprechen denjenigen, die oben im Zusammenhang mit den Ansprüchen 3 bis 6 erläutert wurden.

Nach Anschluß des Herstellungsverfahrens ist der Zusatzkörper außen am Grundkörper angebracht, ohne dass sich hierbei nennenswerte Einschränkungen der dämmenden Eigenschaften des Zusatzkörpers ergeben. Der Zusatzkörper hat sowohl gute thermisch isolierende als auch schalldämmende Eigenschaften.

Die Verbindung des Zusatzkörpers am Grundkörper ist über eine Kunststoffschweißverbindungsschicht hergestellt. Eine derartige Verbindung ist sicher ausgelegt und benötigt kein zusätzliches Verbindungsmaterial, was Materialverträglichkeitsprobleme ausschließt und auch, was das Recycling des Luftführungselements angeht, Vorteile bringen kann.

Dadurch, dass der Zusatzkörper aufgrund der Anbringung außen am Grundkörper nicht mit der im Luftführungselement geführten Luft in Kontakt kommt, ergibt sich eine größere Flexibilität bei der Material- und Strukturwahl des Zusatzkörpers. Es wird so ein druckstabil ausführbares Luftführungselement geschaffen, welches mit relativ geringem Aufwand an luftführende Nachbarbauteile angeschlossen werden kann.

Ein entsprechender Verbund aus dem Grundkörper und dem Zusatzkörper kann also Vorteile bei der Anschlusstechnik zu weiterführenden Bauteilen haben. Die Kunststoffschweißverbindungsschicht kann zwischen dem Zusatzkörper und dem Grundkörper eine flächige, alternativ hierzu aber auch nur eine partielle Verbindung herstellen.

Die dämmenden Eigenschaften des Zusatzkörpers können bei einer partiellen Verbindung des Zusatzkörpers mit dem Grundkörper gezielt auch nur partiell zum Tragen kommen.

Eine Wandstärke des Zusatzkörpers zwischen 2 und 5 mm führt zu einem guten Kompromiss zwischen Dämmwirkung des Zusatzkörpers in Bezug auf Akustik und Isolationswirkung.

Ausführungsbeispiele der Erfindung werden nachfolgend anhand der Zeichnung näher erläutert. In dieser zeigen:
- Fig. 1: einen Querschnitt durch ein erfindungsgemäß hergestelltes Luftführungselement, welches auf einem Kraftfahrzeug-Bodenblech aufliegt;
- Fig. 2: schematisch einen Teil einer Vorrichtung zur Durchführung des erfindungsgemäßen Verfahrens zur Herstellung eines Luftführungselements gemäß Fig. 1 im Querschnitt; und
- Fig. 3: schematisch eine weitere Ausführung einer Vorrichtung zur Durchführung des erfindungsgemäßen Verfahrens zur Herstellung eines Luftführungselements nach Fig. 1 im Querschnitt.

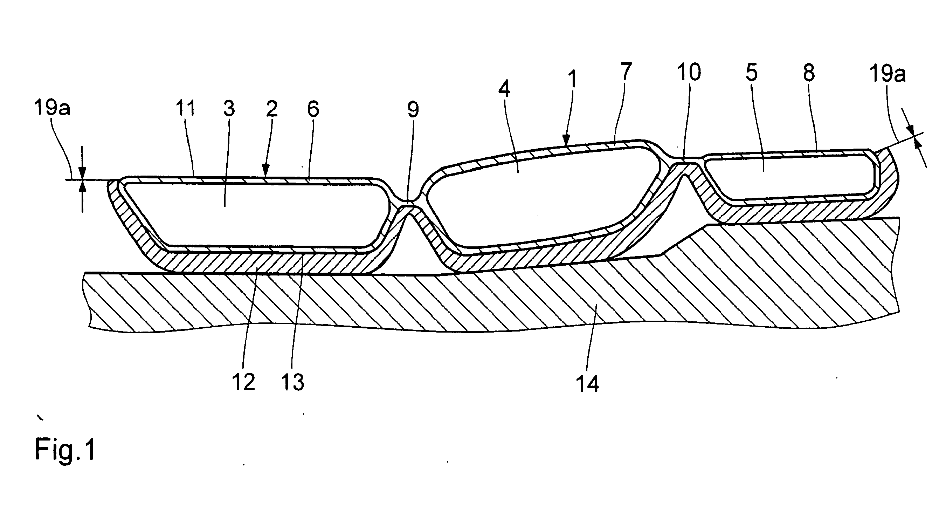

Ein in Fig. 1 im Querschnitt senkrecht zur Richtung des Luftführung dargestelltes Luftführungselement 1 dient zur Luftverteilung im Innenraum eines Kraftfahrzeugs.

Das Luftführungselement 1 weist einen Grundkörper 2 aus Kunststoff auf, bei der dargestellten Ausführung aus hochfestem Polyethylen, welches auch mit dem Kürzel PE HD bezeichnet wird. Der Grundkörper 2 gibt insgesamt drei parallel nebeneinander verlaufende flache Luftkanäle 3, 4, 5 mittels diese begrenzenden rohrförmigen Grundkörperabschnitten 6, 7, 8 vor. Jeweils zwei Benachbarte der Grundkörperabschnitte 6, 7, 8 sind über Verbindungsstege 9, 10 miteinander verbunden, sodass insgesamt der einstückige Grundkörper 2 resultiert.

An der in Fig. 1 unteren Hälfte einer Außenwand 11 des Grundkörpers 2 liegt flächig ein dämmender, insbesondere thermisch isolierender, Zusatzkörper 12 aus Schaumstoff an. Der Zusatzkörper 12 hat eine Wandstärke zwischen 2 und 5 mm und folgt im Bereich der unteren Hälfte des Grundkörpers 2 der Kontur von diesem. Der Zusatzkörper 12 ist aus Polyethylenschaum. Der Grundkörper 2 ist mit dem Zusatzkörper 12 über eine Kunststoffschweißverbindungsschicht 13 verbunden, welche im Bereich der unteren Hälfte des Grundkörpers 2 dessen Außenwand 11 folgt.

Bei der Ausführung nach Fig. 1 umgibt der Zusatzkörper 12 den Grundkörper 2 in Form einer Halbschale, also teilumfänglich. Der Zusatzkörper kann auch einen kleineren oder einen größeren Teil des Umfangs des Grundkörpers 2 umgeben. Insbesondere ist es auch möglich, dass der Zusatzkörper 12 den Grundkörper 2 vollumfänglich umgibt.

Über den Zusatzkörper 12 liegt das Luftführungselement 1 an einem Bodenblech 14 des Kraftfahrzeugs an.

Warm- oder Kaltluft, die vom Luftführungselement 1 geführt wird, ist aufgrund des Zusatzkörpers 12 thermisch vom Bodenblech 14 isoliert. Die Temperatur des Bodenblechs 14 hat also praktisch keinen Einfluss auf die Temperatur der Luft, die im Luftführungselement 1 geführt ist.
Zudem kann der Zusatzkörper 12 eine schalldämmende Wirkung haben, insbesondere können keine Vibrationen und Schwingungen der Fahrzeugstruktur über die Luftführung in den Fahrgastraum übertragen werden.

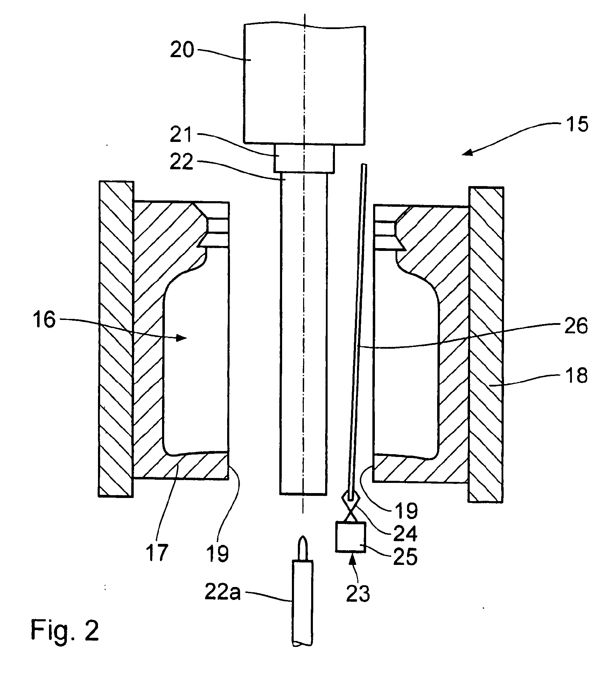

Das Luftführungselement 1 wird mit Hilfe einer Herstellvorrichtung 15 hergestellt, von der eine erste Ausführung in Fig. 2 schematisch teilweise dargestellt ist. Diese umfasst ein temperierbares Blaswerkzeug mit einer Blasform 16, welche zwei jeweils die Hälfte der Blasform 16 bildende formgebende Werkzeughälften 17, 18 aufweist. In Fig. 2 sichtbar ist der Teil der Blasform 16, welcher zur Ausbildung eines der Luftkanäle 3 bis 5 dient. Die Werkzeughälften 17, 18 sind auf in Fig. 2 nicht dargestellte Weise zueinander zwischen einer in Fig. 2 gezeigten Offen- und einer Schließstellung verlagerbar. In der Schließstellung liegen die Werkzeughälften 17, 18 über eine Quetschkante 19 aneinander an. Eine durch die Quetschkante 19 vorgegebene Werkzeugtrennlinie 19a ist schematisch in Fig. 1 wiedergegeben. Die Herstellvorrichtung 15 umfasst ferner einen Blaskopf 20 mit einer Düse 21 zum Ausstoßen eines schlauchförmigen Vorformlings 22 zwischen die beiden formgebenden Werkzeughälften 17, 18 in deren Offenstellung. Zudem dient eine in Fig. 2 unterhalb der Blasform 16 dargestellte Blasnadel 22a, welche zum Vorformling 22 fluchtend angeordnet ist, zum Einbringen von Blasluft in den Vorformling 22. Die Blasluft kann gleichzeitig als Kühlmedium für die Blasform 16 verwendet werden. Falls erforderlich, kann die Blasform 16 auch über ein anderes Kühlmedium gekühlt werden. Auf diese Weise kann der Blasform 16 über den Vorformling 22 zugeführte Wärme wieder abgegeben werden.

Die Herstellvorrichtung 15 umfasst zudem einen Manipulator 23 mit einer Greifzange 24 und einer diese ansteuernden Steuereinheit 25. Der Manipulator 23 dient dazu, einen flächigen plattenförmigen Schaumstoffkörper 26 bei geöffneter Blasform 16 zwischen dem Vorformling 22 und der in Fig. 2 rechts liegenden Werkzeughälfte 18 einzubringen. Die Quer- und Längsabmessungen des Schaumstoffkörpers 26 sind derart, dass dieser über die die Blasform 16 vorgebenden Werkzeughälften 17, 18 hinausragt.

Mit Hilfe einer in Fig. 2 nicht dargestellten Saugeinrichtung wird der Schaumstoffkörper 26, der einen Zusatz-Vorformling für den Zusatzkörper 12 darstellt, nach dem Einbringen durch den Manipulator 23 an der Quetschkante 19 der rechten Werkzeughälfte 18 fixiert.

Mit der Herstellvorrichtung 15 wird das Luftführungselement 1 folgendermaßen hergestellt: Zunächst werden die Werkzeughälften 17, 18 in die in Fig. 2 dargestellte Offenstellung gebracht. Dann wird der Vorformling 22 mit Hilfe der Düse 21 aus dem Blaskopf 20 zwischen die Werkzeughälften 17, 18 ausgestoßen und eingebracht. Gleichzeitig hierzu wird der Schaumstoffkörper 26 mit dem Manipulator 23 von einem Lagerstapel abgenommen und zwischen den Vorformling 22 und der rechten Werkzeughälfte 18 eingebracht. Nach dem Einbringen des Schaumstoffkörpers 26 wird dieser mit Hilfe der Saugeinrichtung an der Werkzeughälfte 18 fixiert. Die Werkzeughälften 17, 18 werden dann in die Schließstellung gebracht, sodass die Blasform 16 geschlossen ist. Anschließend wird Blasluft aus der Düse 21 ausgestoßen, sodass der Vorformling 22 in der Blasform 16 die Form des Grundkörpers 2 erhält. Dabei verdrängt der Vorformling 22 den Schaumstoffkörper 26, bis dieser flächig an dem Abschnitt der Blasform 16 anliegt, der vor der rechten Werkzeughälfte 18 vorgegeben wird. Der Schaumstoffkörper 26 ist vor diesem Verdrängungsvorgang zur Verbesserung seiner Tiefziehbarkeit thermisch vorbehandelt werden. Durch die thermische Energie des Vorformlings 22 verschweißt die dem Schaumstoffkörper 26 zugewandte Außenwand des Vorformlings 22 mit der dem Vorformling 22 zugewandten Wand des Schaumstoffkörpers 26, sodass sich dort die Schweißverbindungsschicht 13 bildet. Mittels der Quetschkanten 19 wird überschüssiges Material des Vorformlings 22 und des Schaumstoffkörpers 26 abgetrennt, sodass, gegebenenfalls noch nach einem Entgratungsprozess, das Luftführungselement 1 vorliegt. Das entstandene Luftführungselement wird dann entnommen und endbearbeitet.

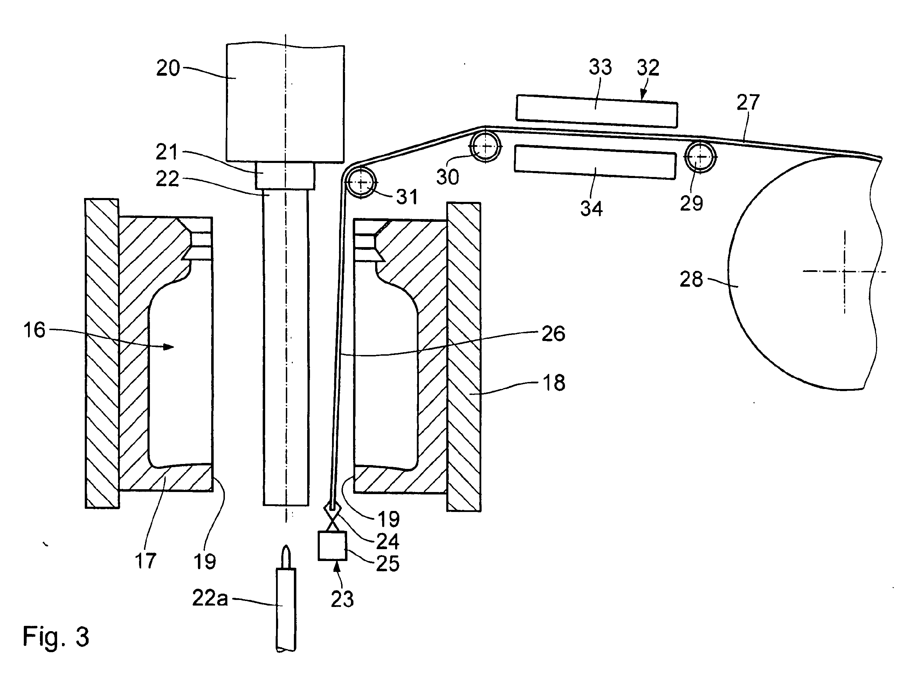

Fig. 3 zeigt eine weitere Ausführungsform einer Herstellvorrichtung zur Herstellung des Luftführungselements 1. Bauelemente, die denjenigen entsprechen, die vorstehend schon unter Bezugnahme auf die Fig. 2 erläutert wurden, tragen die gleichen Bezugszeichen und werden nicht nochmals im Einzelnen diskutiert.
Bei der Ausführung nach Fig. 3 wird der Schaumstoffkörper 26 in Form eines Schaumstoffbandes 27 dem Blaswerkzeug zugeführt.

Hierzu greift die Greifzange 24 des Manipulators 23 das freie Ende des Schaumstoffbandes 27 und zieht dieses in die in Fig. 3 dargestellte Position, in welcher ein Endabschnitt des Schaumstoffbandes 27 die gleiche Lage einnimmt, wie der plattenförmige Schaumstoffkörper 26 bei der Ausführung nach Fig. 2. Anschließend wird dieser Endabschnitt des Schaumstoffbandes 27 mit der Saugeinrichtung der Werkzeughälfte 18 fixiert. Das Einbringen des den Schaumstoffkörper 26 vorgebenden Endabschnitts des Schaumstoffbandes 27 in die Blasform 16 erfolgt bei der Ausführung nach Fig. 3 gleichzeitig zum Ausstoßen und damit Einbringen des Vorformlings 22 zwischen die Werkzeughälften 17, 18.

Das Schaumstoffband 27 wird von einer Schaumstoffrolle 28 abgerollt, die in Fig. 3 nur teilweise dargestellt ist. Das Abrollen des Schaumstoffbandes 27 von der Schaumstoffrolle 28 kann alternativ oder zusätzlich durch einen Antrieb der Schaumstoffrolle 28 erfolgen oder unterstützt werden. Auf dem Weg hin zum Blaswerkzeug wird das Schaumstoffband 27 über Umlenkrollen 29 bis 31 geführt. Zusammen mit der Schaumstoffrolle 28 und den Umlenkrollen 29 bis 31 stellt der Manipulator 23 bei der Ausführung nach Fig. 3 eine Zuführeinrichtung zum Zuführen des Schaumstoffbandes 27 dar. Zwischen zwei Umlenkrollen 29, 30 durchläuft das Schaumstoffband 27 eine Heizeinrichtung 32 mit zwei Infrarot-(IR)Strahlern 33, 34, von denen einer oberhalb und einer unterhalb des Schaumstoffbandes 27 angeordnet ist. Alternativ zu IR-Strahlern kann die Heizeinrichtung auch mit einem anderen Heizmittel, zum Beispiel mit einer Gasheizung, ausgerüstet sein.

Während des Einbringvorgangs des Schaumstoffkörpers 26 durch Abrollen des Schaumstoffbandes 27 von der Schaumstoffrolle 28 wird das Schaumstoffband 27 in der Heizeinrichtung 32 thermisch vorbehandelt. Diese thermische Vorbehandlung ist taktgebunden und wird mit dem Arbeitstakt des Blaswerkzeugs synchronisiert, sodass sichergestellt ist, dass der Schaumstoffkörper 26 vorbeheizt in die Blasform 16 eingebracht wird. Diese thermische Vorbehandlung verbessert die Ausbildung der Schweißverbindungsschicht 13, wie oben schon beschrieben.

Gleichzeitig kann die thermische Vorbehandlung auch die Tiefziehbarkeit des Schaumstoffkörpers 26 verbessern, wodurch die Abbildungsgenauigkeit des Verbundes aus dem Vorformling 22 und dem Schaumstoffkörper 26 bei der Formgebung von diesem in der Blasform 16 auch bei einer komplizierten, durch die Blasform 16 zugegebenen Geometrie des Luftführungselements verbessert ist. Eine taktgebundene thermische Vorbehandlung des Schaumstoffkörpers 26 wird auch bei der Ausführung der Herstellvorrichtung nach Fig. 2 eingesetzt, zum Beispiel auf dem Förderweg zwischen dem Lagerstapel und der in Fig. 2 gezeigten Position des Schaumstoffkörpers 26.

Mit den Herstellungsverfahren nach den Fig. 2 und 3 wird jeweils ein Luftführungselement mit einem Zusatzkörper hergestellt, welcher den Grundkörper teilumfänglich umgibt. Zur Herstellung eines Grundkörpers mit diesen vollumfänglich umgebenden Zusatzkörper können in Abwandlung der Herstellungsverfahren nach den Fig. 2 und 3 Zusatzkörper 26 auch beiderseits des Vorformlings 22 zwischen diesen und die Werkzeughälften 17, 18 eingebracht werden. Es ergeben sich Herstellvorrichtungen, die in Bezug auf eine das Blaswerkzeug in den Fig. 2 und 3 vertikal halbierende Mittelebene spiegelsymmetrisch sind.

Bei den vorstehend beschriebenen Herstellungsverfahren erfolgte das Blasen des Blasvorformlings 22 zum Grundkörper 2 einerseits und das Verbinden des Grundkörpers 2 mit dem sich als Folge des Blasvorgangs ausformenden Zusatzkörpers 12 andererseits in einem geschlossenen Verfahrensgang.

## Patentansprüche

1. Verfahren zur Herstellung eines Luftführungselements (1) für ein Kraftfahrzeug
- mit einem mindestens einen Luftkanal (3 bis 5) vorgebenden Grundkörper (2) aus Kunststoff,
- mit mindestens einem dämmenden Zusatzkörper (12) aus Schaumstoff, der mit dem Grundkörper (2) flächig verbunden ist,
- wobei eine Außenwand (11) des Grundkörpers (2) zumindest abschnittsweise mit dem Zusatzkörper (12) über eine Kunststoffschweißverbindungsschicht (13) verbunden ist,
mit folgenden Verfahrensschritten:
- Öffnen einer Blasform (16) eines Blaswerkzeuges,
- Einbringen eines schlauchförmigen Blasvorformlings (22) in die geöffnete Blasform (16),
- Einbringen mindestens eines flächigen Schaumstoffkörpers (26) zwischen den Blasvorformling (22) und einen Wandabschnitt (18) der Blasform,
- Schließen der Blasform (16),
- Blasen des Blasvorformlings (22) zum Grundkörper (2) für das Luftführungselement (1),
- Verschweißen des Grundkörpers (2) mit dem als Folge des Blasvorgangs den Zusatzkörper (12) bildenden Schaumstoffkörper (26),
- Entnehmen und Endbearbeiten des Luftführungselements (1),
**dadurch gekennzeichnet, dass** der Schaumstoffkörper (26) vor dem Einbringen taktgebunden thermisch vorbehandelt und gleichzeitig mit dem Blasvorformling (22) in die Blasform eingebracht wird.

2. Verfahren nach Anspruch 1, **dadurch gekennzeichnet, dass** der Schaumstoffkörper (26) durch einen Manipulator (23) eingebracht wird.

3. Verfahren nach Anspruch 1 oder 2, **dadurch gekennzeichnet, dass** der Schaumstoffkörper (26) zum Einbringen von einer Schaumstoffrolle (28) abgerollt wird.

4. Verfahren nach einem der Ansprüche 1 bis 3, **dadurch gekennzeichnet, dass** der Schaumstoffkörper (26) mit Hilfe eines Unterdrucks in der eingebrachten Position fixiert wird.

5. Verfahren nach einem der Ansprüche 1 bis 4, **gekennzeichnet durch** ein Temperieren der Blasform (16).

6. Verfahren nach Anspruch 5, **gekennzeichnet durch** ein Innenkühlen der Blasform (16) durch die beim Blasen eingebrachte Blasluft.

7. Vorrichtung zur Durchführung eines Herstellungsverfahrens nach einem der Ansprüche 1 bis 6
- mit einem Blaswerkzeug,
- mit einer Blasform (16) mit mindestens zwei zum Öffnen und Schließen der Blasform (16) zueinander verlagerbaren Werkzeughälften (17, 18),
- mit einem Blaskopf (20) zum Einbringen eines schlauchförmigen Blasvorformlings (22) in die geöffnete Blasform,
- mit einer Blaseinrichtung (22a) zum Einbringen von Blasluft zur Formgebung des Blasvorformlings (22),
**gekennzeichnet durch** eine Heizeinrichtung (32), insbesondere mindestens einen IR-Strahler (33, 34), zum taktgebundenen thermischen Vorbehandeln des Schaumstoffkörpers (26) vor dem Einbringen in die Blasform (16) sowie **durch** einen Manipulator (23) zum Einbringen mindestens eines flächigen Schaumstoffkörpers (26) zwischen den Blasvorformling (22) und einen Wandabschnitt (18) der Blasform (16) gleichzeitig mit dem Einbringen des blasvorformlings (22).

8. Vorrichtung nach Anspruch 7, **gekennzeichnet durch** eine Zuführeinrichtung (23, 28 bis 31) zum Zuführen eines Schaumstoffbandes (27).

9. Vorrichtung nach Anspruch 7 oder 8, **gekennzeichnet durch** eine Saugeinrichtung zur Unterdruckfixierung des Schaumstoffkörpers (26) in der eingebrachten Position.

10. Vorrichtung nach einem der Ansprüche 7 bis 9, **gekennzeichnet durch** ein temperierbares Blaswerkzeug.

11. Vorrichtung nach Anspruch 10, **dadurch gekennzeichnet, dass** die Blaseinrichtung (22a) so ausgebildet ist, dass sie eine Innenkühlung der Blasform (16) herbeiführen kann.

## Claims

1. Method of manufacturing an air guiding element (1) for a motor vehicle
- with a basic body (2) made of plastic predefining at least one air duct (3 to 5),
- with at least one damping additional body (12) made of foam, which is connected to the basic body (2) in surface-area contact,
- an outer wall (11) of the basic body (2) being connected at least in certain portions to the additional body (12) by means of a plastic welded-connection layer (13),
having the following method steps:
- opening a blow mould (16) of a blow moulding tool,
- introducing a tubular parison (22) into the opened blow mould (16),
- introducing at least one two-dimensional foam body (26) between the parison (22) and a wall portion (18) of the blow mould,
- closing the blow mould (16),
- inflating the parison (22) to form the basic body (2) for the air guiding element (1),
- welding the basic body (2) to the foam body (26) forming the additional body (12) as a consequence of the blow-moulding operation,
- removing and finishing the air guiding element (1),
**characterized in that** the foam body (26) is thermally pretreated in a cycle-dependent manner before introduction and is introduced into the blow mould at the same time as the parison (22).

2. Method according to Claim 1, **characterized in that** the foam body (26) is introduced by a manipulator (23).

3. Method according to Claim 1 or 2, **characterized in that**, to introduce it, the foam body (26) is unrolled from a roll of foam (28).

4. Method according to one of Claims 1 to 3, **characterized in that** the foam body (26) is fixed by means of a negative pressure in the position in which it is introduced.

5. Method according to one of Claims 1 to 4, **characterized by** the temperature of the blow mould (16) being controlled.

6. Method according to Claim 5, **characterized by** internal cooling of the blow mould (16) by the blowing air introduced during the blow-moulding.

7. Device for carrying out a manufacturing method according to one of Claims 1 to 6,
- with a blow moulding tool,
- with a blow mould (16) with at least two tool halves (17, 18) which can be displaced in relation to each other for opening and closing the blow mould (16),
- with a parison die (20) for introducing a tubular parison (22) into the opened blow mould,
- with a blowing means (22a) for introducing blowing air for shaping the parison (22),
**characterized by** a heating means (32), in particular at least one IR emitter (33, 34) for the cycle-dependent thermal pretreatment of the foam body (26) before introduction into the blow mould (16) and also by a manipulator (23) for introducing at least one two-dimensional foam body (26) between the parison (22) and a wall portion (18) of the blow mould (16) at the same time as the parison (22) is introduced.

8. Device according to Claim 7, **characterized by** a feeding means (23, 28 to 31) for feeding a foam strip (27).

9. Device according to Claim 7 or 8, **characterized by** a suction means for fixing the foam body (26) by negative pressure in the position in which it is introduced.

10. Device according to one of Claims 7 to 9, **characterized by** a temperature-controllable blow moulding tool.

11. Device according to Claim 10, **characterized in that** the blowing means (22a) is formed in such a way that it can bring about internal cooling of the blow mould (16).

## Revendications

1. Procédé pour la fabrication d'un élément de conduit d'aération (1) pour véhicule automobile,
- avec un corps de base présentant au minimum un conduit d'air (3 à 5) en plastique,
- avec au minimum un corps supplémentaire (12) absorbant en mousse, relié à la surface du corps de base (2),
- tandis qu'une paroi extérieure (11) du corps de base (2) est au moins partiellement reliée avec le corps supplémentaire (12) par le biais d'une couche de liaison en plastique (13) soudée,
comportant les étapes de procédé suivantes :
- ouverture du moule de soufflage (16) d'un outil de soufflage,
- mise en place d'une préforme de soufflage (22) en forme de tuyau dans le moule de soufflage (16) ouvert,
- mise en place d'au moins un corps en mousse (26) entre la préforme de soufflage (22) et une partie de la paroi (18) du moule de soufflage,
- fermeture du moule de soufflage (16),
- soufflage de la préforme de soufflage (22) pour obtenir le corps de base (2) pour l'élément de conduit d'aération (1),
- soudage du corps de base (2) avec le corps en mousse (26) qui devient le corps supplémentaire (12) suite au processus de soufflage,
- enlèvement et finition de l'élément de conduit d'aération (1),
**caractérisé en ce que** le corps en mousse (26) est d'abord prétraité de façon thermique, puis il est introduit dans le moule de soufflage au même moment que la préforme de soufflage (22).

2. Procédé selon la revendication 1, **caractérisé en ce que** le corps en mousse (26) est introduit à l'aide d'un manipulateur (23).

3. Procédé selon la revendication 1 ou 2, **caractérisé en ce que** le corps de mousse (26) est prélevé sur un rouleau de mousse (28).

4. Procédé selon l'une des revendications 1 à 3, **caractérisé en ce que** le corps de mousse (26) est fixé dans sa position par dépressurisation.

5. Procédé selon l'une des revendications 1 à 4, **caractérisé en ce que** la température du moule de soufflage (16) est contrôlée.

6. Procédé selon la revendication 5, **caractérisé par** un refroidissement interne du moule de soufflage (16) obtenu par l'air introduit lors du soufflage.

7. Dispositif pour la mise en oeuvre d'un procédé de fabrication selon l'une des revendications 1 à 6,
- avec un outil de soufflage,
- avec un moule de soufflage (16) comprenant au moins deux moitiés d'outil (17, 18) pour l'ouverture et la fermeture du moule de soufflage (16), pouvant être déplacées l'une vers l'autre,
- avec une tête de soufflage (20) permettant d'introduire une préforme de soufflage en forme de tuyau (22) dans le moule de soufflage ouvert,
- avec un dispositif de soufflage (22a) pour introduire l'air nécessaire à la formation de la préforme de soufflage (22),
**caractérisé en ce qu'**il possède un dispositif de chauffage (32), c'est à dire au minimum un émetteur infrarouge (33, 34), pour le pré-traitement thermique du corps en mousse (26) avant son introduction dans le moule de soufflage (16), ainsi qu'un manipulateur (23) pour l'introduction d'au moins un corps en mousse (26) plat, entre la préforme de soufflage (22) et une partie de la paroi (18) du moule de soufflage (16) en même temps que l'introduction de la préforme de soufflage (22).

8. Dispositif selon la revendication 7, **caractérisé par** une unité d'acheminement (23, 28 à 31) servant à amener une bande de mousse (27).

9. Dispositif selon la revendication 7 ou 8, **caractérisé par** un dispositif d'aspiration pour la fixation par dépressurisation du corps en mousse (26) dans la position introduite.

10. Dispositif selon l'une des revendications 7 à 9, **caractérisé en ce que** la température de l'outil de soufflage peut être contrôlée.

11. Dispositif selon la revendication 10, **caractérisé en ce que** l'installation de soufflage (22a) est conçue de manière à pouvoir produire un refroidissement interne du moule de soufflage (16).
